# EUROPEAN PATENT SPECIFICATION

(11) **EP 0 319 139 B1**
(45) Date of publication and mention of the grant of the patent: **12.01.1994**
(21) Application number: 88310108.1
(22) Date of filing: 27.10.1988
(51) Int. Cl.: H04M 9/00, H04Q 11/04

(54) **Digital key telephone system**
Digitales-Tastengegensprechsystem
Système téléphonique numérique à touches

(30) Priority: 30.11.1987 US 126170
(43) Date of publication of application: 07.06.1989
(73) Proprietor: NORTHERN TELECOM LIMITED, Montreal, Quebec H2Y 3Y4 (CA)
(72) Inventor: Irwin, George Frank, Kanata Ontario, K2K 1N3 (CA); Smelters, Paul Joseph, Ottawa Ontario, K1N 8A3 (CA); Robertson, David Joseph, Ottawa Ontario, K1Z 6Y3 (CA); Maginley, Ronald James,, Ann Arbor, Michigan 48103 (US); Chapman, Alan Stanley John,, Kanata, Ontario K2K 1V5 (CA)
(74) Representative: Ryan, John Peter William

(56) References cited:
- EP-A- 0 153 140
- EP-A- 0 186 139
- GB-A- 2 091 068
- IEEE JOURNAL OF SOLID-STATE CIRCUITS, vol. SC-21, no. 2, April 1986, pages 247-251, IEEE, New York, US; M. COOPERMAN et al.: "Experimental single-chip PABX"
- IEEE GLOBAL TELECOMMUNICATIONS CONFERENCE, Tokyo, 15th - 18th November 1987, pages 50.7.1 - 50,7,5, IEEE, New York, US; N. YAMANAKA et al.: "High-speed time-division switch for braodband ISDN"
- INTERNATIONAL SWITCHING SYMPOSIUM, Montreal, 21st - 25th September 1981, session 31B, paper 5, pages 1-7; P. JAIN et al.: "Orthogonal memory for digital switching"

## Description

The invention is in the field of telephone communications apparatus and methods, and more particularly relates to small telephone systems and the like, sometimes referred to as key telephone systems

Telephone systems of various sizes are also of various corresponding architectures. For example, central exchanges are usually large and characteristically are designed to include concentration of telephone lines in switching networks operated by a central controller complimented by various peripheral controllers. In the interest of extreme reliability, the central controller, switching network, and even some of the peripheral controllers are duplicated to achieve functional reliability through redundancy. Extensive maintenance software is provided to manage these elements so that in spite of inevitable randomly occurring failures or malfunctions, service to telephone subscribers continues to be substantially uninterrupted. In contrast, private branch exchanges (PBXs) tend to be smaller and more cost sensitive. PBX architectures are usually similar to that of central exchanges, however, with less duplication and redundancy and consequently less functional reliability. Advantages of the typical time division multiplex, pulse code modulation switching exchange are many, however one of the outstanding advantages is that of being adaptable to carry voice and or data signals typically at a base rate of 64 Kb/s, or for example in accordance with recent integrated service digital network (ISDN) recommended standards. Another advantage, exemplified in a typical modern telephone exchange, is that a plurality of directory or extension numbers may appear at any one telephone set while only a single telephone line actually connects the telephone set to the exchange.

Some examples of very small telephone systems are generally referred to as key telephone systems. Traditionally a key telephone system is provided by extensive telephone line and control lead wiring between key telephone sets. Each key telephone line extends to a telephone exchange. Each of the telephone sets includes a plurality of push button switches or keys, each for connecting the telephone set to a particular telephone line among a plurality of telephone lines routed to the key telephone set. The switching function of line selection is mechanically provided and distributed among the key telephone sets. Any features in addition to plain ordinary telephone service (POTS) must be added on a per line basis. The primary advantage of these systems is economy with small size. However, if such a system is required to expand along with the organization it serves, over a time it eventually becomes more expensive on a per line and feature basis than a private branch exchange would be.

Private branch and central office exchanges operating with time division multiplex pulse code modulation digital signals have been commonly available for over a decade. Telephone station sets for use with these exchanges are typically of the analog type, however in the last few years at least one design of a digital telephone have become available for use with the SL 1 AND SL 100 private branch exchanges manufactured by Northern Telecom Limited.

One example of a key telephone system, presently manufactured by Northern Telecom Limited, is disclosed by Eric Dodman in Telesis volume 9 Number 1, titled "Vantage 12: A Key Telephone System With Flexible Features" and published by Bell-Northern Research in 1982. In this example, analog key telephone stations are each connected to a port via an analog voice pair, for carrying analog voice signals, and a frequency shift keyed pair, for carrying signalling and supervision signals. The port is provided on a line card which also includes a port for interface between the switching matrix and a switching centre, such as a central office. A common controller functions in concert with controllers in each of the key telephone station sets to complete call progresses as required by users of the key telephone system. However telephone systems of the analog type are impractical to interface with ISDN, as will likely be required by business users in the near future.

It is an object of the invention to provide a telephone system wherein the functional advantages of key telephone systems and digital signal communications are co-existent via key telephone sets each connected to the system by a single telephone line.

In one example a key telephone system is provided wherein time division multiplexed signals are exchanged between telephone sets by means of one or more time switches. Each time switch is modular such that a time switch module is capable of handling only those traffic requirements of a small group of telephone line appearances. Hence, the bulk of the switching equipment is modularly incremental such that cost is substantially proportional the number of key telephone sets served by the system.

According to one aspect of the present invention there is provided a digital key telephone system for providing communication paths, as directed by a call controller, between digital signal communications (DSC) terminals via line appearances provided by corresponding digital signal ports, the digital key telephone system comprising:
a time division multiplex (TDM) serial transmission path, being connected to a predetermined plurality of said digital signal ports, for providing a predetermined plurality of time division multiplex transmit (TDMT) and receive (TDMR) channels in fixed pair relationship with each of the said digital signal ports, the TDMT and TDMR channels residing in respective transmit and receive serial bit streams, and being of a fixed time slot interval for transmission of a fixed plurality of bit occurrences in excess of a predetermined plurality of m information bits;
a first transmission bus including a plurality of at least m parallel signal paths;
timing means for defining predetermined TDM frame intervals and channel occurrences, in the TDM serial transmission path, and for defining time slot occurrences being a whole number multiple of said channel occurrences during one of said frame intervals, in relation to the parallel first transmission bus, in response to timing signals from the call controller;
a circuit switch module being connected between the TDM serial transmission path and the first transmission bus and comprising:
a module transmission bus including a plurality of m parallel signal paths;
conversion circuit means for transferring the TDMT serial bit stream states of each channel occurrence to the first transmission bus and for transferring bit states of the m parallel signal paths of the module transmission bus to the TDMR serial bit stream during corresponding channel occurrences;
time switch means, being connected between the first transmission bus and the module transmission bus, for storing bit states, from the first transmission bus, said bit states being those occurring during time slot intervals having been defined by the call controller, and transferring the stored bit states to the module transmission bus in response to the defined channel occurrences from the timing means.

According to another aspect of the present invention there is provided a digital key telephone system for providing communication paths, as directed by a call controller, between digital signal communications (DSC) terminals via line appearances provided by corresponding digital signal ports, the digital key telephone system comprising:
a first transmission bus including more than m parallel conductors;
a TDM transmission path having at least one transmit (TDMT) and receive (TDMR) channel in fixed association with each of said digital signal ports, each of said channels being capable of transmitting a plurality of bit states corresponding in number to said parallel conductors;
a circuit switch module being connected between the first transmission bus and the TDM serial transmission path comprising:
timing means for defining TDM frame intervals and serial channel addresses, and for defining parallel time slot addresses being a whole number multiple of occurrences of said serial channel addresses during each TDM frame interval;
a module transmission bus consisting of m parallel conductors;
conversion means for transferring serial bit states from each TDMT channel to the parallel conductors of the first transmission bus during predetermined time slots, and for transferring bit states from the m parallel conductors of the module transmission bus to each TDMR channel occurrence;
time switch means being responsive to the timing means for storing bit states from the first transmission bus and occurring in time slots as defined by the call controller and at memory locations as defined by the call controller, and transferring bit states to the module transmission bus from said memory locations as accessed in response to said serial channel addresses.

According to a further aspect of the present invention there is provided a method for operating a digital key telephone system comprising the steps of:
a) defining sequential frame intervals and x sequential channel intervals within each of the frame intervals, and during each channel interval receiving m information bits and at least one other bit and transmitting m information bits and at least one other bit between x/2 respective fixed two channel connected digital signal port positions and a fixed x channel connected circuit switch position;
b) performing step a) at up to y circuit switch positions and associated digital signal port positions;
c) at each circuit switch position asserting bit states, transmitted in each channel interval, in parallel on corresponding parallel leads of a first transmission bus at a fixed exclusively corresponding time slot occurrence in xy time slot occurrences per frame interval;
d) at a call controller reading the states of said other bits from the first transmission bus for transmit channel related sequentially encoded information pertinent to telephone call progress, and coincidentally asserting appropriate other bit states for ultimate reception at the digital signal port position;
e) at each circuit switch position, capturing m bit states from the first transmission bus during time slot occurrences as designated by the call controller and storing each of the m captured bit states at up to x of x channel associated memory locations as designated by the call controller;
f) sequentially reading m bit states from each of the x memory locations in synchronism with occurrences of said x sequential channel intervals defined in step a)
g) in a first case of having read a designated memory location, transmitting the m bit states within the channel interval for reception at the associated digital signal port location, in a second case of having read a non designated memory location, transmitting a predetermined m bit states, representing an idle code, within the channel interval for reception at the associated digital signal port location, and in any case transmitting said other bit state as being provided at the instant by step d) for reception at the associated digital signal port location .

According to another aspect of the present invention there is provided a method for operating a digital signal communication path in a digital key telephone system comprising the steps of:
a) sequentially transferring bit states, from a serial frame and origin channel organized first transmission medium, to exclusively dedicated time slots in a parallel frame organized transmission medium;
b) designating at least one of said time slots from which bit states are to be stored in a first memory having a plurality of memory locations each corresponding to possible destination channels of a serial frame and channel organized second transmission medium, designating one of said memory locations in association with each of said designated time slots, and with each occurrence of a designated time slot, storing said bit states in said designated memory location;
c) in synchronism with the channel occurrences of the second transmission medium reading each of the corresponding memory locations;
d) asserting bit states, while being read from each designated memory location, in a second parallel organized transmission medium and otherwise asserting predetermined bit states;
e) capturing the bit states as they occur in the second parallel organized transmission medium and asserting the last captured bit states serially during the corresponding instant channel of the serial frame and channel organized second transmission medium whereby information is transmitted into the digital key telephone system in an origin channel and routed out of the digital key telephone system in a destination channel.
This method may also include the further steps of:
f) designating one other of said time slots from which bit states are to be stored in a second memory, having at least one memory location, and storing said bit states therein;
g) designating a channel in the serial frame and channel organized second transmission medium;
h) asserting the bits states, stored in the memory location of the second memory, in a third parallel organized medium at a time corresponding to an occurrence of channel designated in step g);
i) selecting one of the second and third parallel organized mediums in accordance with which of the respective bit states asserted therein is of a higher value, and ;
in step e) capturing said bit states from the selected medium,
whereby the information in one of two origin channels is selected and routed out of the digital key telephone systems in said destination channel, to provide a voice conference function at a telephone station set corresponding to the destination channel.

According to yet another aspect of the present invention there is provided a digital telephone system for providing communication paths, as directed by a call controller, between line appearances, the system comprising:
a first transmission bus including more than m parallel conductors;
a TDM serial transmission path having at least one transmit (T) channel and receive (R) channel in fixed association with each of a plurality of the line appearances, each of said channels being capable of transmitting bit states corresponding in number to said parallel conductors;
a circuit switch module being connected between the first transmission bus and the TDM serial transmission path, comprising:
timing means for defining TDM frame intervals and serial channel addresses, and, for defining parallel time slot addresses being a whole number multiple of occurrences of said serial channel addresses during each TDM frame interval;
first and second module transmission buses each consisting of m parallel conductors;
conversion means for transferring serial bit states from each TDMT channel to the parallel conductors of the first bus during predetermined time slots, and for transferring bit states from the m parallel conductors of either of the module transmission buses to each TDMR channel occurrence;
first time switch means being responsive to the timing means for storing bit states, occurring in time slots in the first transmission bus as defined by the call controller, at memory locations, corresponding to TDMR channels defined by the call controller, and for transferring bit states to the first module transmission bus from said memory locations as defined by said serial channel addresses;
second time switch means being responsive to the timing means for storing bit states, occurring in time slots in the first transmission bus as defined by the call controller, at a memory location defined by the call controller, and for transferring bit states to the second module transmission bus from one of said memory locations being designated by the call controller as being in association with ones of said serial channel addresses;
selection means being responsive to the values of coincidentally occurring bit states on the first and second module transmission buses for directing the conversion means to transfer the bit states from one of the first and second module transmission buses exclusively, whereby capability of conference communication between any three of said line appearances is provided within the circuit switch module.

An example embodiment is described with reference to the accompanying drawing in which:
Figure 1 is a block diagram of a key telephone system in accordance with the invention;
Figure 2 is a graphical illustration of operating timing pulses and or signals generated within a circuit switch module used in figure 1;
Figure 3 is a block diagram of a timing sequence generator used in the circuit switch module for providing the timing signals illustrated in figure 2;
Figure 4 is a block schematic diagram of counters, used in a circuit switch module in figure 1, and arranged to provide time slot and channel addresses for operation of the circuit switch module;
Figure 5 is a block schematic diagram of a converter circuit used in the circuit switch module in figure 1;
Figure 6 is a graphical illustration of various timing signals used in the operation of the converter circuit in figure 5;
Figure 7 is a block schematic diagram of a time switch circuit used in the circuit switch module in figure 1 to provide circuit switched communication paths in the digital key telephone system; and
Figure 8 is a block schematic diagram of a time switch conference circuit in the circuit switch module and used in combination with the time switch circuit of figure 7 to provide a conference feature in the digital key telephone system.

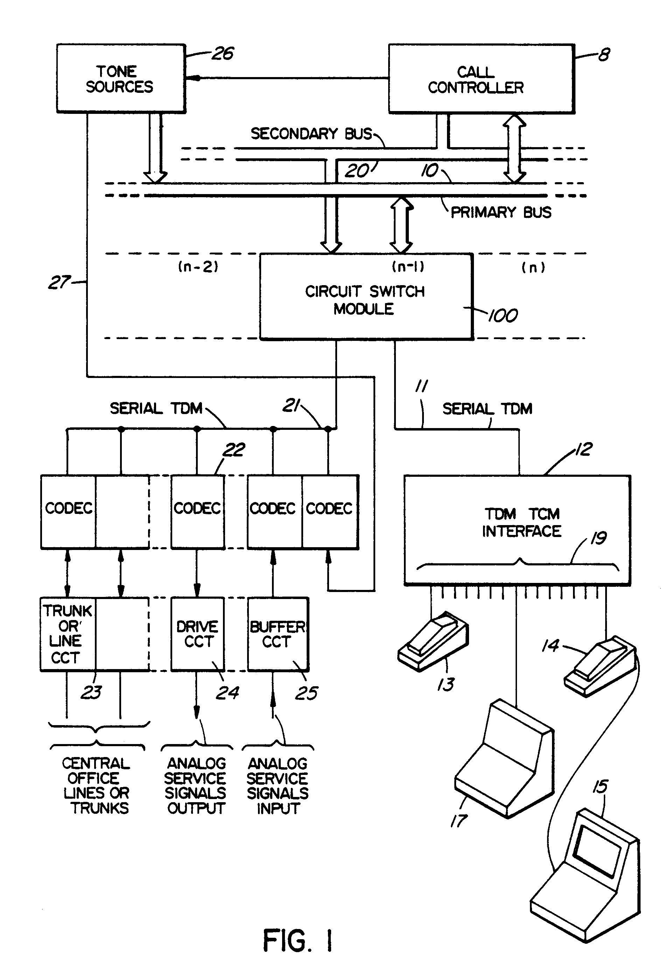

In figure 1 a digital key telephone system provides for connection of various digital telephone instruments, as exemplified at 13 and 14, and various digital data terminals, personal computers or the like, as exemplified at 15 and 17, which are able to communicate, via the system, with one another as appropriate, and with other devices via line or trunk circuits 23. The lines and or trunks serve to connect the digital key telephone system with other telephone facilities, for example a central office or private exchange, not shown. A back bone of the digital key telephone system is provided by a short parallel time division multiplex (TDM) bus 10, which provides a wide band communication path between up to nine 64 channel circuit switch modules 100, a call controller 8 and tone sources 26. If any of the tone sources 26 provide an analog signal, such is coupled into the system via a lead 27. The bus 10 is referred to as a primary or first transmission bus or medium, and a secondary bus 20, similar to the primary bus 10 provides for unidirectional communications from the call controller 8. Each of the circuit switch modules 100 couples 64 ten bit transmit serial channels to predetermined corresponding time slots in the bus 10, and up to 64 parallel selected TDM time slots on either of the buses 10 or 20 to 64 ten bit receive serial channels. 32 of the serial transmit and receive channels are coupled to an internal ports circuit 12 via a serial TDM path 11. The remaining 32 serial transmit and receive channels are coupled to external port circuits at 22 via a serial TDM path 21. Each of the channels is capable of transmitting a binary signal pulse stream at a rate of 80 kilo bits per second, with at least 64 kilo bits per second being available as a channel for pulse code modulated (PCM) voice information, or data information. The remaining sixteen kilobits maybe committed to supervisory and signalling communications, in association with the PCM or data information, or may be used for any other convenient purpose. In this example the internal ports circuit 12 consists of sixteen TDM time compression multiplex (TMC) interfaces. The TMC method of signal transmission is sometimes referred to as "Ping Pong" transmission. Each of these interfaces provides a transmit path between each of TCM links 19 and two predetermined and fixed serial TDM channels in the serial TDM path 11. In a similar manner analog signals are interfaced to and from various trunk or line circuits at 23, and or drive or buffer circuits at 24 and 25, with the serial TDM path 21 via the external ports 22 provided by CODEC circuits. Alternately, it may be advantageous to provide an external TDM port for interfacing with another telephone facility via a digital signal transmission link, T1 or DS30 for example. However in this case, each CODEC circuit interfaces with a predetermined and fixed transmit and receive channel pair of the serial TDM path 21. Hence, for each and every line appearance (that is a place where a digital telephone instrument or other digital device or a digitally interfaced or compatible line, trunk and the like may be connected to the digital key telephone system), there is at least one predetermined ten bit parallel time slot in the primary bus 10 which is allocated to receive information from the line appearance. In an alternate example, the time slots on the bus 10 correspond to line appearances for the purpose of transmitting information thereto. However, such alternate example is not herein further discussed. The call controller 8 and one or more tone sources 26 are connected to the primary bus 10 for communication via a remaining 64 of the ten bit parallel time slots. The call controller 8 may receive all ten bits of each time slot on the bus 10. Normally, only the two bits corresponding to a sixteen kilobit sub-channel are received from the bus 10 by the call controller 8, for purposes of call control. The call controller 8 provides signalling and supervision via the secondary bus 20 at time slot occurrences corresponding to intended line appearance destinations via the appropriate circuit switch module 100, but without time switching. Therefore each circuit switch module 100 transmits 10 bits to the primary bus 10 but receives only 8 bits from the primary bus 10, the other two bits being received via the secondary bus 20. Significant economy, particularly in smaller scale examples of this digital key telephone system are realized from this structure. This structure provides the circuit switching capability, in this otherwise hard wired time division arrangement. If the digital key telephone system is to be expanded, the addition of another circuit switch module 100 and the necessary internal and or external ports 12 and 22, as required, provides for service to an additional 64 TDM channel appearances.

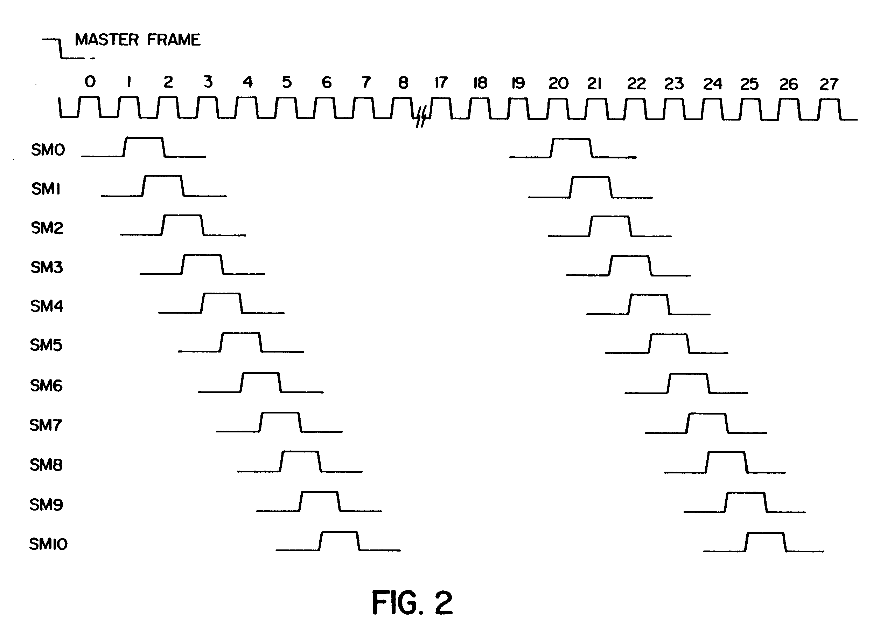

A more detailed discussion of the structure and operation of the modular circuit switch module 100 is with reference to figures 2-8.

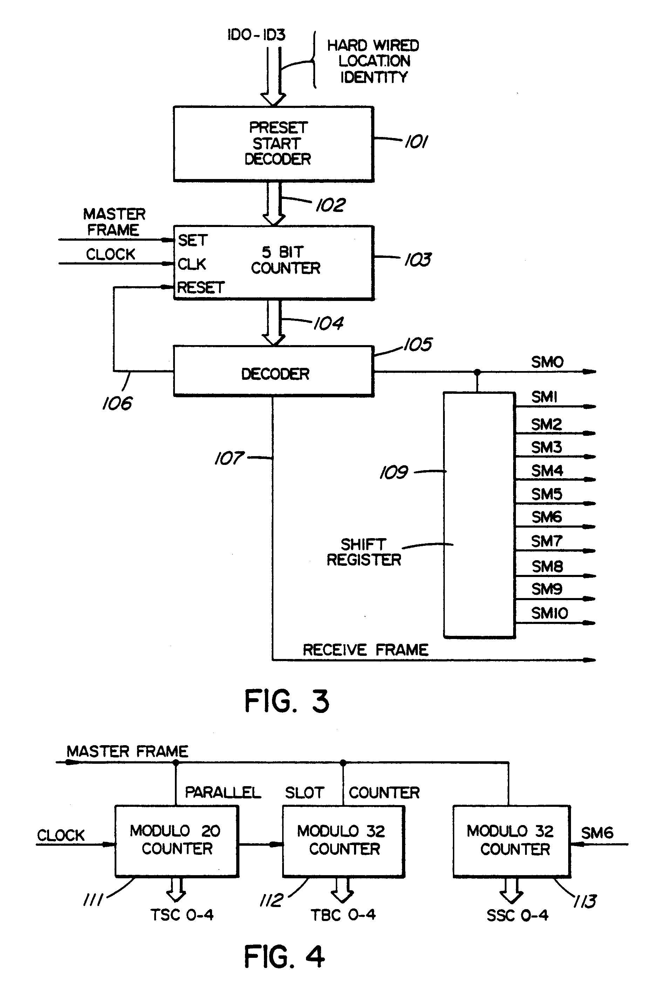

In order that each of one or more circuit switch modules 100 be able to transfer information from the serial TDM paths 11 and 21 to the parallel TDM bus 10 without contention, a phased timing sequencer, as shown in figure 3, resides within each of the modules 100 for regulating the functions of the module. Wave forms exemplified in figure 2 illustrate a master frame timing pulse occurring at a rate of 1 Khz, clock pulses numbered 0-27 occurring at a rate of 5.12 MHz and state machine timing pulses SMO-SM10. With the switch module 100 installed in the system, a preset start decoder 101 is connected to a hard wired location, not shown, which provides an identity, that is a fixed four bit binary word, IDO-ID3. The combination of the signal states of the bits IDO-ID3 is unique for each possible switch module location in the digital key telephone system. The preset start decoder 101 generates a 5 bit binary word on a bus 102, in response to the combination of bit states as shown in table 1. A five bit counter 103 is preset by each occurrence of the master frame pulse, to correspond to the word on the bus 102 and thereafter is incremented with each occurrence of a clock pulse. An output 104 of the counter 103 is decoded by a decoder 105 which generates a reset signal on a lead 106 with each occurrence of a count of 19 in the counter 103. Thus with the occurrence of the next clock pulse, the counter 103 is reset to a count of zero. Thus a modulo 20 counting function is provided, which is phased as is illustrated in table 1.

**TABLE 1**

| CIRCUIT SWITCH MODULE | ID3 | ID2 | ID1 | ID0 | PRESET VALUE OF BUS 102 | TDM-11 FRAME AND TIME SLOT CORRESPONDENCE | TDM-21 FRAME AND TIME SLOT CORRESPONDENCE |
|---|---|---|---|---|---|---|---|
| 0 | 0 | 0 | 0 | 0 | 18 | 0 | 2 |
| 1 | 0 | 0 | 0 | 1 | 17 | 1 | 3 |
| 2 | 0 | 0 | 1 | 0 | 14 | 4 | 6 |
| 3 | 0 | 0 | 1 | 1 | 13 | 5 | 7 |
| 4 | 0 | 1 | 0 | 0 | 10 | 8 | 10 |
| 5 | 0 | 1 | 0 | 1 | 9 | 9 | 11 |
| 6 | 0 | 1 | 1 | 0 | 6 | 12 | 14 |
| 7 | 0 | 1 | 1 | 1 | 5 | 13 | 15 |
| 8 | 1 | 0 | 0 | 0 | 2 | 16 | 18 |

In accordance with the table, for example for the circuit switch module 0, the channel zero on the serial TDM path 11 is inserted onto the parallel TDM bus 10 in time slot zero, channel one in time slot 20 and so on until the last channel, channel 31, of a serial TDM frame is inserted into time slot 620.

Stated in other terms, each TDM path has 32 parallel ten bit receiving channels assigned to it on the primary bus 10, and each of these channels is separated from the other by 19 other channel occurrences.

The decoder 105 also generates an SM0 timing pulse, coincident with the count of 19 occurring in the counter 103. A shift register 109 responds to the SM0 timing pulse and the clock pulses to generate additional timing pulses SM1-SM10 as illustrated in figure 2.

Referring to figure 4, the time slot occurrences on the parallel TDM bus 10 are tracked by a parallel slot counter which includes a modulo 20 counter 111 and a modulo 32 counter 112. The counter 111 responds to the 5.12 MHz clock pulses to provide repetitive counts of 0 through 19 on five time slot count leads TSC 0-4. The counter 112 is incremented with each reset occurrence in the counter 111 to provide repetitive counts of 0 through 31 on five time block count leads TBC 0-4, whereby in combination binary signals on the TSC and TBC leads define 640 parallel time slot addresses per frame. A serial channel counter function is provided by a counter 113 which provides 32 channel counter addresses on serial channel count leads SCC 0-4 to define channel occurrences in the serial TDM paths 11 and 21. The counter 113 is incremented with each time block occurrence as indicated by the timing pulse SM6. All of the counters 111, 112 and 113 are reset with each occurrence of the master frame pulse.

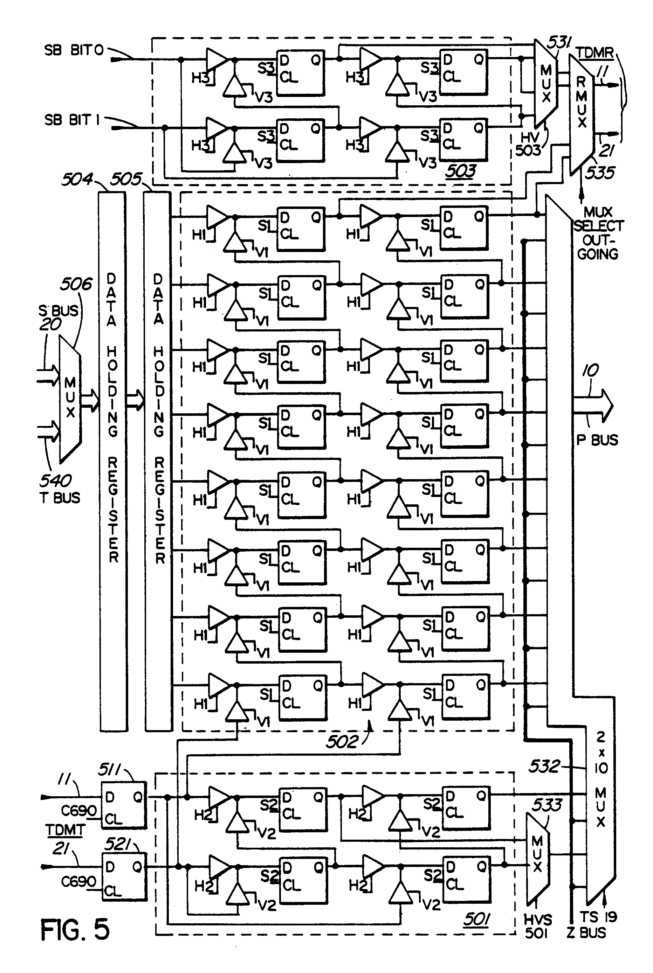

The converter circuit illustrated in figure 5 resides within the circuit switch module 100 and performs both serial to parallel conversions and parallel to serial conversions for each of the 64 TDMT and the 64 TDMR channels on the TDM paths 11 and 21. As before mentioned, the TDMT channels are incoming and carry data or voice, plus signalling bits originating at the terminal instruments, while the corresponding TDMR channels are outgoing, each to the originating terminal instrument. Each incoming time slot includes 10 binary bits which are converted directly to parallel form and asserted during the predetermined time slot interval on the primary bus 10. Each outgoing time slot includes 10 binary bits which are obtained from one of two sources: one source being a corresponding time slot interval on the secondary bus 20; the other source being 8 bits from any time slot interval on the primary bus 10, the 8 bits having traversed the time switch, plus 2 bits from the time slot interval on the secondary bus 20 corresponding to the TDMR channel occurence.

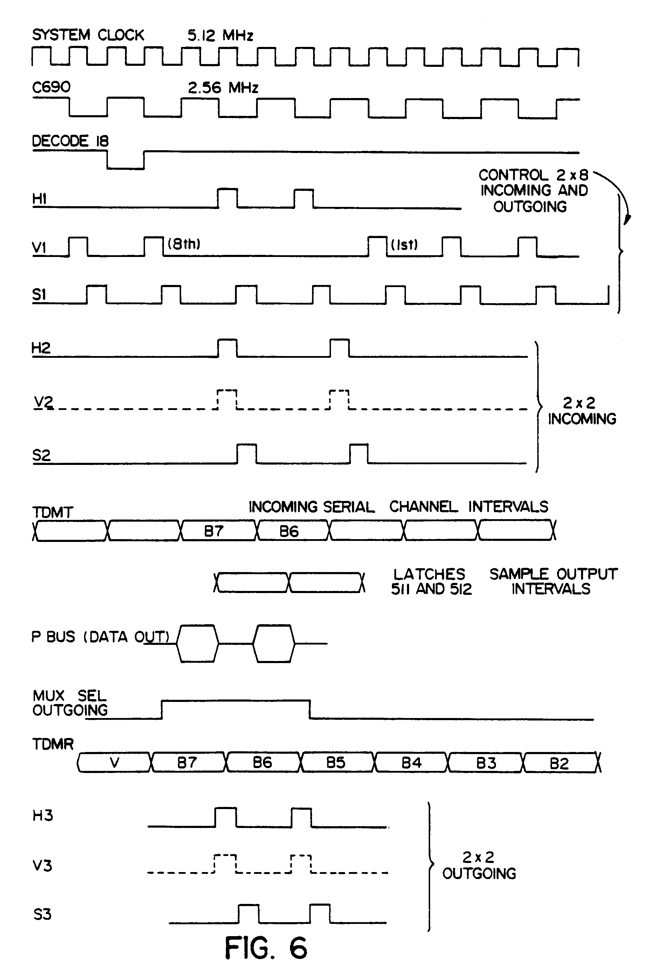

The converter circuit is discussed in more detail with reference to the timing signals illustrated in figure 6. A SYSTEM CLOCK waveform shown at the top of figure 6, and some of the other waveforms in figure 6 are idealistically depicted for convenience as having vertical rise and fall portions. Actually, in practice these waveforms have sloped rise and fall portions similar to those waveforms illustrated in figure 2, which are more realistically depicted. The converter circuit includes three orthogonal shift registers shown at 501, 502 and 503 respectively. These three registers perform the required serial to parallel, and parallel to serial conversions. Each of the orthoganal shift registers 501, 502 and 503 is associated with a clock generator, not shown, which produces non-overlapping timing signals, illustrated in figure 6, for shifting and directional control. Vertical directional control signals V1, V2 and V3 are used to vertically direct shift functions of the register 502, 501 and 503 respectively. Horizontal directional control signals H1, H2 and H3 are used to horizontally direct shift functions of the registers 502, 501 and 503. The actual loading of D type flip flop elements in the registers 502, 501 and 503 is clocked by signal pulses S1, S2 and S3. The control signals V2 and V3 are shown in broken line to indicate that these signal pulses are 20 system clock periods removed from the adjacent H2 and H3 signal pulses, such that each commences at 40 system clock intervals.Bits of the TDMR serial bit streams are timed to be coincident with the rising edges of a serial digital loop clock signal C690. Bits of the TDMT serial bit streams on the paths 11 and 21 are sampled and re-timed to likewise be co-incident, by latches 511 and 521. A half cycle of the system clock prior to the rising edge of the serial digital loop clock signal C690, contents of the (2 by 8) outgoing register 502 are selected by a receive multiplexor 535 to provide the first bits of each of the TDMR channels at 11 and 21. The receive multiplexor selection is in response to a MUX SEL OUTGOING control signal shown in figure 6. The outgoing bits are timed by the rising edge of the clock signal C690 to start transmission of a 10 bit time slot. Shortly thereafter, the starting bits of the corresponding TDMT channels are sampled by the latches 511 and 521 using the falling edge of the same clock signal C690. The sampled bits are then applied to the (2 by 2) incoming register 501. During the said same clock signal C690, contents of the register 502 and the incoming register 501 are asserted in parallel by a multiplexor 532 on the leads of the primary bus 10. Only in an instance of a time slot (TS) 19 occurrence, which is indicated by a rising edge of a decode 18, in Figure 6, will the multiplexor 532 gate Z bus signal states to the P bus 10. A half cycle of the same system clock signal after the falling edge of the said same C690 clock signal, the three orthogonal registers 501, 502 and 503 are clocked, resulting in the incoming register 501 accepting said starting bits, the outgoing register 503 moving the second outgoing bit to the multiplexor 535, and the register 502 moving 8 bits of the TDMT path 21 toward the multiplexor 532. At the same time the incoming register 501 moves the remaining two bits toward the multiplexor 532 via a multiplexor 533. The next two outgoing parallel information bytes are moved through data holding registers 504 and 505, under control of timing signals SM2 and SM6 and hence, into the register 502. At the same moment, as before described, the register 501 stores the first two bits of each incoming TDMT channel. Once the first two bits have occurred, the registers 501 and 503 receive no further clock signals until the start of the next outgoing time slot sequence when all 10 registered bits are shifted in parallel toward the P bus 10.

At the start of the next time slot sequence, registers 501 and 503 are caused to move their respective contents (2 bits) vertically, that is upwardly in figure 5. Thereafter the next eight TDMT bits are shifted vertically into the register 502 and the previous contents are likewise shifted out to be transmitted via the multiplexor 535 and the TDMR paths 11 and 21. The horizontal directional control signals and the vertical directional control signals continue to be alternately asserted thereby repeating the parallel to the serial and serial to parallel cycle for each TDM channel on TDM paths 11 and 21.

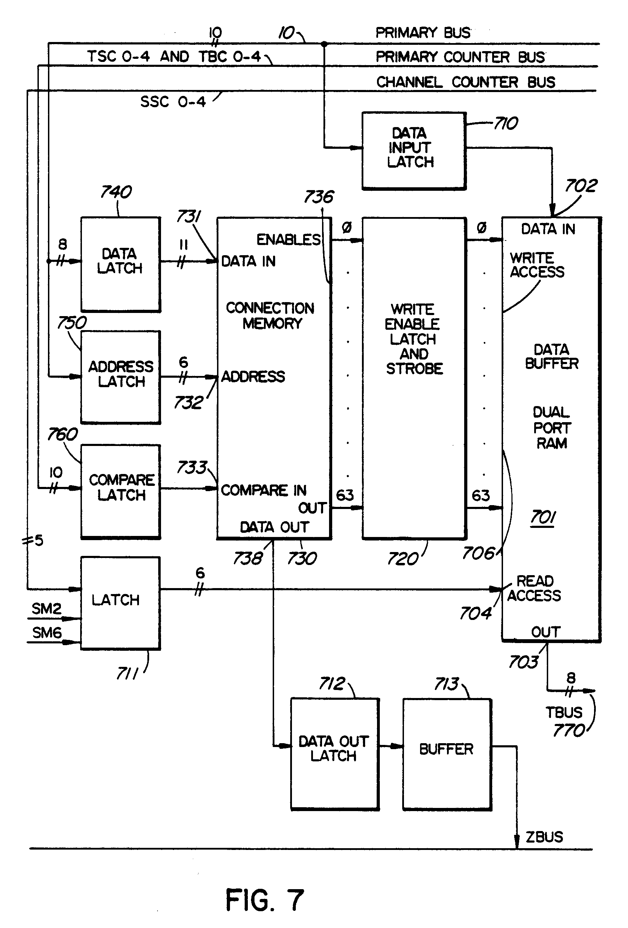

The time switch circuit in figure 7 provides for a timely transfer of 8 information bits from one of the 640 time slots on the primary bus 10 to a parallel T bus input of the parallel input multiplexer 506 of the converter circuit in figure 5, and thereby ultimately to a TDM path (11 or 21) time slot, as directed by the call controller 8. The information bits of each time slot on the P bus 10 are momentarily captured by a data input latch circuit 710 and thereafter applied at an input 702 of a dual port random access memory (RAM) 701. The dual port RAM 701 includes an output 703 which drives a T bus (module transmission bus or medium) 770 in response to a six bit address applied at a read access address port 704. The RAM 701 differs from a typical dual port memory device in that for the purpose of storing information received at its input 702, it does not include the typical address decode circuitry. Instead, each write address is decoded and applied to an individual one of 64 write enable leads at 706. The decoded write address is timed via a write enable latch and strobe circuit 720. Any number of the write enable leads may be asserted by the circuit 720 simultaneously. The dual port RAM 701 responds, to a signal assertion or signal assertions on any or all of its 64 write enable leads at 706, by storing the signal states of said 8 information bits at the corresponding memory location or locations as the case may be. For example, if none of the leads at 706 is asserted, no storage locations are written. If one or more of the leads at 706 is asserted, the one or more corresponding storage locations are written. Reading of the 64 dual port RAM storage location occurs sequentially on a regular and periodic basis, under the control of a flip flop, not shown, in the latch 711 which is toggled by signals SM2 and SM6, and the 32 sequentially generated TDM channel addresses which are generated by the counter 113 in figure 4.

A connection memory 730 contains information as to the actual time slots of the 640 P bus 10 time slots from whence information bit states are stored in the dual port RAM 701. The connection memory 730 is provided by a content addressable memory which includes an eleven bit data input port 731, a six bit address port 732 and a 10 bit compare address port 733. The general structure and operation of content addressable memories is known. In this example P bus addresses, from whence information is to be stored, are lodged in memory locations in the connection memory 730. Each of 64 memory locations, not shown, correspond with a separate one of 64 output leads at 736. A digital comparitor, not shown, is associated with each of the 64 memory locations such that addresses appearing at the compare port 733 are each compared with the information stored at each of the 64 memory locations. In every instant where the address at the compare port 733 and the information at a memory location is the same and the memory location also includes an asserted validity bit, the corresponding one of the 64 output leads at 736 is asserted. The asserted state is eventually transferred via the circuit 720 to the dual port RAM 701, which responds as previously described.

Operation of the digital key telephone system is directed by the call controller 8, which uses 32 dedicated time slots on the P bus 10 for lodging information into the memory locations of the connection memory 730 via a data latch circuit 740 and an address latch circuit 750. The information is delivered from the call controller 8 in the form of four bytes each of which occupies time slot 19 of 4 sequentially occurring time blocks on the P bus 10. The four bytes include a command byte, followed by an address byte, a low order data byte, and a higher order data byte. Each of these bytes is asserted along with a validity signal on one of the two remaining leads of the P bus 10 which indicates that the bytes are in fact an instruction from the call controller 8. A portion of the command byte specifies either a write or a read function intended for one of a connection memory, a source connection memory or a destination connection memory. A comparitor responds to the validity signal and a match between a remaining portion of the command byte and the IDO-3 by causing the address latch to store the next byte, that is the address byte. Thereafter the data latch 740 captures 11 bit states of the low and higher order bytes, which are subsequently stored in the memory location of the connection memory 730 as indicated by six address bits asserted by the address latch 750. Provision is also made for the call controller 8 to confirm the information content of any address in the connection memory. In this case the command byte indicates the read function, and the address byte indicates the memory location to be read. The subsequent low and higher order bytes are driven by the stored information from a data output 738 of the connection memory 730 and via an output latch 712 and buffer 713 to the Z bus and thence via the multiplexor 532 in figure 5 onto the P bus 10.

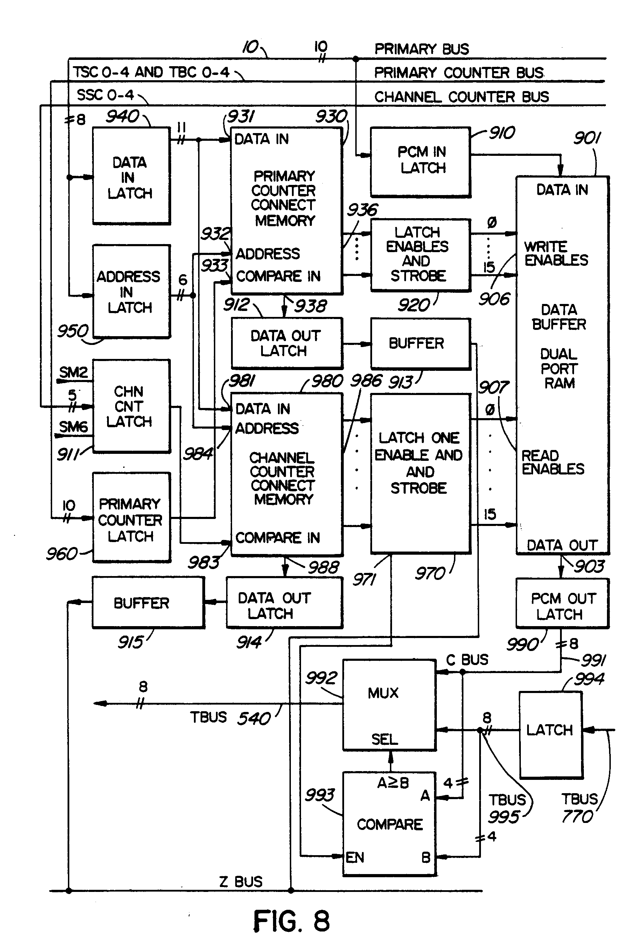

The time switch conference circuit in figure 8 provides a three party conference feature in the digital key telephone system. The time switch conference circuit adds an ability for a timely transfer of 8 information bits from another of the 640 time slots on the P bus 10, ultimately to, for example, said TDM path time slot previously referred to at the beginning of the discussion of figure 7. Very briefly by way of introduction, bytes are presented to a multiplexor 992 via the T buses 770 output from figure 7 and via a conference C bus 991. The four most significant bits (not including the sign bits) of each byte are compared in a comparitor 993 which directs the multiplexor 992 to assert the 8 bits from the C bus 991 on the T bus 540 in the event that the value of the 4 bits from the C bus 991 is equal or greater than a value of the 4 bits from the T bus 995. In the event the T bus 995 value in greater, then the 8 bits from the T bus 995 are asserted on the T bus 540 by the multiplexor 992. Thus a three party conference call maybe implemented wherein each party hears only the instant loudest speaking party of the other two parties.

Considering the time switch conference circuit of figure 8 in more detail, the information bits of each time slot on the P bus 10 are momentarily captured by a PCM input latch 910 and thereafter applied at an input 902 of a dual port RAM 901. The dual port RAM 901 includes an output 903 which is buffered to the C bus 991 via a PCM output latch circuit 990. Likewise the T bus 770 is buffered to the T bus 995 via a latch circuit 994. The dual port RAM 901 differs from the dual port RAM 701 in that it has only 16 memory locations and lacks typical address decode circuitry for the purpose of reading out information stored at these memory locations. Each write address is decoded and applied to an individual one of 16 write enable leads at 906 and likewise each read address is decoded and applied at an individual one of 16 read enable leads at 907. The decoded write address is timed via a write enable latch and strobe circuit 920. Likewise the decoded read address is timed via a read enable latch and strobe circuit 970. The read enable latch and strobe circuit 970 also includes an EXCLUSIVE OR logic circuit not shown, which responds to a single decoded read address occurrence by asserting a compare enable signal on a lead 971. The compare enable signal is used to activate the selection function of the comparitor circuit 993, which in the absence of the compare enable signal causes the multiplexor 992 to assert the T bus 995 bit states onto the T bus 540, exclusively. Hence if no decoded read address or more than one decoded read address is asserted at inputs of the read enable latch and strobe circuit 970, the conference function does not occur. The dual port RAM 901 responds, to a signal assertion on a write enable lead at 906, by storing the signal states of said 8 information bits at the corresponding memory location. Likewise, reading of a memory location in the dual port RAM 901 occurs in response to a corresponding read enable lead at 907 being asserted.

A source connection memory 930 contains information as to the actual P bus time slots from whence information bit states are stored in the dual port RAM 901. The source connection memory 930 is provided by a content addressable memory having 16 memory locations, not shown, each corresponding to a separate one of 16 output leads at 936. The source connection memory 930 includes an eleven bit data port 931, a six bit address port 932 and a ten bit compare address port 933. A digital comparitor, not shown, is associated with each of the 16 memory locations such that addresses appearing at the compare port 933 are each compared with the information stored at each of the 16 memory locations. In an instant where the address at the compare port 933 and the information at a memory location are the same and the memory location also includes an asserted validity bit, the corresponding one of the 16 output leads at 936 is asserted. The asserted state represents a decoded write address, which is subsequently transferred via the circuit 920 to the dual port RAM 901 which responds as previously described.

A destination connection memory 980 contains information as to the actual TDMR time slots on the TDM paths 11 and 21 to which information bit states stored in the dual port RAM 901 may be directed via the multiplexor 992 and the T bus 540. The destination connection memory 980 is of a structure similar to that of the previously described source connection memory 930. Addresses appearing at a compare port 983 are each compared with information stored at each of 16 memory locations. In an instant where the information at the compare port 983 and the information at a memory location are the same and the memory location also includes an asserted validity bit, a corresponding one of 16 output leads at 986 is asserted. The EXCLUSIVE OR logic circuit in the read enable latch and strobe circuit 970 permits the corresponding read enable lead at 907 to be asserted, which causes the dual port RAM 901 to read out the 8 information bit states from the corresponding memory location as previously described.

The information appearing at the compare port 983 is asserted from the channel counter bus leads SSC 0-4 by a channel counter latch circuit 911. The latch circuit 911 also includes a flip flop, not shown, which is toggled by the timing signals SM2 and SM6 and thereby provides 64 addresses per frame, similar to that previously discussed in relation to the latch circuit 711.

Operation of the conference function in the digital key telephone system is directed by the call controller 8, which uses the 32 dedicated time slots on the P bus 10 for lodging information into the memory locations of the source connection memory 930 and the destination connection memory 980 via a data latch circuit 940 and an address latch 950 in a manner similar to that previously discussed in relation to the connection memory 730. Likewise the call controller 8 may confirm the information content of the source connection memory 930 by way of a data output 938, a data output latch circuit 912, a buffer circuit 913 and the Z bus, connected as shown in figure 8. Information content of the destination connection memory is also available to the call controller 8 by way of a data output 988, a data output latch circuit 914, a buffer circuit 915, and the Z bus, connected as shown in figure 8.

## Claims

1. A digital key telephone system for providing communication paths, as directed by a call controller (8), between digital signal communications (DSC) terminals (13, 14, 15, 17) via line appearances provided by corresponding digital signal ports (19), the digital key telephone system comprising:
a time division multiplex (TDM) serial transmission path (11), being connected to a predetermined plurality of said digital signal ports, for providing a predetermined plurality of time division multiplex transmit (TDMT) and receive (TDMR) channels in fixed pair relationship with each of the said digital signal ports, the TDMT and TDMR channels residing in respective transmit and receive serial bit streams, and being of a fixed time slot interval for transmission of a fixed plurality of bit occurrences in excess of a predetermined plurality of m information bits;
a first transmission bus (10) including a plurality of at least m parallel signal paths;
timing means (111, 112, 113) for defining predetermined TDM frame intervals and channel occurrences, in the TDM serial transmission path (11), and for defining time slot occurrences being a whole number multiple of said channel occurrences during one of said frame intervals, in relation to the parallel first transmission bus (10), in response to timing signals from the call controller (8);
a circuit switch module (100) being connected between the TDM serial transmission path (11) and the first transmission bus (10) and comprising:
a module transmission bus (T BUS; 540, 770) including a plurality of m parallel signal paths;
conversion circuit means (501-506, 511, 521, 531-533, 535) for transferring the TDMT serial bit stream states of each channel occurrence to the first transmission bus (10) and for transferring bit states of the m parallel signal paths of the module transmission bus (T BUS; 540) to the TDMR serial bit stream during corresponding channel occurrences;
time switch means (710, 701), being connected between the first transmission bus (10) and the module transmission bus (T BUS; 770), for storing bit states, from the first transmission bus (10), said bit states being those occurring during time slot intervals having been defined by the call controller (8), and transferring the stored bit states to the module transmission bus (770) in response to the defined channel occurrences from the timing means.

2. A digital key telephone system for providing communication paths, as directed by a call controller (8), between digital signal communications (DSC) terminals (13, 14, 15, 17) via line appearances provided by corresponding digital signal ports (19), the digital key telephone system comprising:
a first transmission bus (10) including more than m parallel conductors;
a TDM transmission path (11) having at least one transmit (TDMT) and receive (TDMR) channel in fixed association with each of said digital signal ports (19), each of said channels being capable of transmitting a plurality of bit states corresponding in number to said parallel conductors;
a circuit switch module (100) being connected between the first transmission bus (10) and the TDM serial transmission path (11), comprising:
timing means (111-113) for defining TDM frame intervals and serial channel addresses, and for defining parallel time slot addresses being a whole number multiple of occurrences of said serial channel addresses during each TDM frame interval;
a module transmission bus (T BUS; 540, 770) consisting of m parallel conductors;
conversion means (501-506, 511, 521, 531-533, 535) for transferring serial bit states from each TDMT channel to the parallel conductors of the first transmission bus (10) during predetermined time slots, and for transferring bit states from the m parallel conductors of the module transmission bus (T BUS) to each TDMR channel occurrence;
time switch means (710, 701) being responsive to the timing means for storing bit states from the first transmission bus (10) and occurring in time slots as defined by the call controller (8) and at memory locations (701) as defined by the call controller, and transferring bit states to the module transmission bus (T BUS; 770) from said memory locations as accessed in response to said serial channel addresses.

3. A digital key telephone system as defined in claim 2, wherein the conversion circuit comprises:
first, second and third orthogonal memory arrays (501, 502, 503);
said first array (501) for serially receiving bit states from each of the TDMT channels and, on a channel by channel basis, transferring m bit states to the second array (502) sequentially for parallel assertion on the m conductors of the first transmission bus (10) and for asserting at least one bit state, in excess of said m bit states, on a corresponding conductor of the first transmission bus;
said second array (502) for asserting m bit states on the first transmission bus and having just asserted said m bit states on the first transmission bus, then accepting m bit states in parallel from the module transmission bus (T BUS; 540) and at one end (535) of the second array for sequentially asserting said bit states in a corresponding TDMR channel for transmission to the corresponding digital signal port, meanwhile at the other end of the second array for sequentially receiving the m bits of the corresponding TDMT channel for the first array (501);
said third array (503) for accepting a bit state having originated at the call controller (8) and destined for the corresponding TDMR channel and for asserting said bit state at a predetermined moment in said TDMR channel interval.

4. A digital key telephone system as defined in claim 2 wherein the circuit switch module (100) provides connection for two TDM paths and the conversion circuit is adapted to perform the TDMT and TDMR serial parallel conversion on an interleaved channel by channel basis.

5. A digital key telephone system as defined in claim 2 further comprising; a plurality of the circuit switch modules (100), each module being connected with a hard wired unique identification code (IDO - ID3) and wherein the timing means in each of the circuit switch modules is responsive to said unique identification code whereby the associated TDM frame intervals are distributed in phase, and wherein said whole number, defining said whole number multiple, corresponds to one plus a maximum number of circuit switch modules being connectable to the first transmission bus.

6. A method for operating a digital key telephone system comprising the steps of:
a) defining sequential frame intervals and x sequential channel intervals within each of the frame intervals, and during each channel interval receiving m information bits and at least one other bit and transmitting m information bits and at least one other bit between x/2 respective fixed two channel connected digital signal port positions (19) and a fixed x channel connected circuit switch (100) position;
b) performing step a) at up to y circuit switch positions and associated digital signal port positions;
c) at each circuit switch position asserting bit states, transmitted in each channel interval, in parallel on corresponding parallel leads of a first transmission bus (10) at a fixed exclusively corresponding time slot occurrence in xy time slot occurrences per frame interval;
d) at a call controller (8) reading the states of said other bits from the first transmission bus (10) for transmit channel related sequentially encoded information pertinent to telephone call progress, and coincidentally asserting appropriate other bit states for ultimate reception at the digital signal port position (19);
e) at each circuit switch position, capturing m bit states from the first transmission bus during time slot occurrences as designated by the call controller (8) and storing each of the m captured bit states at up to x of x channel associated memory locations (701) as designated by the call controller;
f) sequentially reading m bit states from each of the x memory locations in synchronism with occurrences of said x sequential channel intervals defined in step a)
g) in a first case of having read a designated memory location (701), transmitting the m bit states within the channel interval for reception at the associated digital signal port location (19), in a second case of having read a non designated memory location, transmitting a predetermined m bit states, representing an idle code, within the channel interval for reception at the associated digital signal port location (19), and in any case transmitting said other bit state as being provided at the instant by step d) for reception at the associated digital signal port location (19).

7. A method for operating a digital signal communication path in a digital key telephone system comprising the steps of :
a) sequentially transferring bit states, from a serial frame and origin channel organized first transmission medium (11, 12), to exclusively dedicated time slots in a parallel frame organized transmission medium (10);
b) designating at least one of said time slots from which bit states are to be stored in a first memory (701) having a plurality of memory locations each corresponding to possible destination channels of a serial frame and channel organized second transmission medium (11, 21), designating one of said memory locations in association with each of said designated time slots, and with each occurrence of a designated time slot, storing said bit states in said designated memory location;
c) in synchronism with the channel occurrences of the second transmission medium reading each of the corresponding memory locations;
d) asserting bit states, while being read from each designated memory location, in a second parallel organized transmission medium (T BUS; 770) and otherwise asserting predetermined bit states;
e) capturing the bit states as they occur in the second parallel organized transmission medium (770) and asserting the last captured bit states serially during the corresponding instant channel of the serial frame and channel organized second transmission medium (770) whereby information is transmitted into the digital key telephone system in an origin channel and routed out of the digital key telephone system in a destination channel.

8. A method for operating a digital signal communication path as defined in claim 7, comprising the further steps of:
f) designating one other of said time slots from which bit states are to be stored in a second memory (901) having at least one memory location, and storing said bit states therein;
g) designating a channel in the serial frame and channel organized second transmission medium (11, 21);
h) asserting the bits states, stored in the memory location of the second memory (901), in a third parallel organized medium (991) at a time corresponding to an occurrence of the channel designated in step g);
i) selecting one of the second and third parallel organized mediums (T BUS, 991) in accordance with which of the respective bit states asserted therein is of a higher value, and;
in step e) capturing said bit states from the selected medium,
whereby the information in one of two origin channels is selected and routed out of the digital key telephone systems in said destination channel, to provide a voice conference function at a telephone station set corresponding to the destination channel.

9. A digital telephone system for providing communication paths, as directed by a call controller (8), between line appearances, the system comprising:
a first transmission bus (10) including more than m parallel conductors;
a TDM serial transmission path (11) having at least one transmit (T) channel and receive (R) channel in fixed association with each of a plurality of the line appearances, each of said channels being capable of transmitting bit states corresponding in number to said parallel conductors;
a circuit switch module (100) being connected between the first transmission bus (10) and the TDM serial transmission path (11), comprising:
timing means (111, 112, 113) for defining TDM frame intervals and serial channel addresses, and, for defining parallel time slot addresses being a whole number multiple of occurrences of said serial channel addresses during each TDM frame interval;
first and second module transmission buses (770, 991) each consisting of m parallel conductors;
conversion means (501-506, 511, 521, 531-533, 535) for transferring serial bit states from each TDMT channel to the parallel conductors of the first bus during predetermined time slots, and for transferring bit states from the m parallel conductors of either of the module transmission buses (770, 991) to each TDMR channel occurrence;
first time switch means (710, 701) being responsive to the timing means for storing bit states, occurring in time slots in the first transmission bus (10) as defined by the call controller (8), at memory locations, corresponding to TDMR channels defined by the call controller, and for transferring bit states to the first module transmission bus (770) from said memory locations as defined by said serial channel addresses;
second time switch means (910, 901) being responsive to the timing means for storing bit states, occurring in time slots in the first transmission bus (10) as defined by the call controller (8), at a memory location defined by the call controller, and for transferring bit states to the second module transmission bus (991) from one of said memory locations being designated by the call controller as being in association with ones of said serial channel addresses;
selection means (992, 993) being responsive to the values of coincidentally occurring bit states on the first and second module transmission buses for directing the conversion means to transfer the bit states from one of the first and second module transmission buses exclusively, whereby capability of conference communication between any three of said line appearances is provided within the circuit switch module (100).

## Patentansprüche

1. Digitales Tastentelefonsystem zur durch ein Rufsteuergerät (8) geleiteten Schaffung von Nachrichtenübertragungspfaden zwischen digitalen Signalnachrichtenübertragungsendgeräten (DSC) (13,14,15,17) über Leitungsnachbildungen, die durch entsprechende digitale Signalports (19) gebildet sind, wobei das digitale Tastentelefonsystem folgende Teile umfaßt:
einen seriellen Zeitmultiplex-(TDM-) Übertragungspfad (11), der mit einer vorgegebenen Anzahl der digitalen Signalports verbunden ist, um eine vorgegebene Vielzahl von Zeitmultiplex-Sende-(TDMT-) und Empfangs-(TDMR-) Kanälen in fester paarweiser Beziehung mit jedem der digitalen Signalports zu schaffen, wobei sich die TDMT- und TDMR-Kanäle in jeweiligen Sende- und Empfangs-Bitströmen befinden und ein festes Zeitschlitz-Intervall zur Übertragung einer festen Viezahl von Bit-Auftrittsvorgängen oberhalb einer vorgegebenen Vielzahl von m Informationsbits aufweisen,
einen ersten Übertragungsbus (10), der eine Vielzahl von zumindestens m parallelen Signalpfaden einschließt,
Zeitsteuereinrichtungen (111,112,113) zur Festlegung vorgegebener TDM-Rahmenintervalle und Kanal-Auftrittsvorgänge auf dem seriellen TDM-Übertragungspfad und zur Festlegung von Zeitschlitz-Auftrittsvorgängen, die ein ganzzahliges Vielfaches der Kanal-Auftrittsvorgänge während eines der Rahmenintervalle sind, bezüglich des parallelen ersten Übertragungsbus (10) in Abhängigkeit von Zeitsteuersignalen von dem Rufsteuergerät (8),
ein Durchschaltemodul (100), das zwischen dem seriellen TDM-Übertragungspfad (11) und dem ersten Übertragungsbus (10) angeschaltet ist und folgende Teile umfaßt:
einen Modul-Übertragungsbus (T-Bus;540;770) der eine Vielzahl von m parallelen Signalpfaden einschließt,
Konverterschaltungseinrichtungen (501-506,511,521,531-533,535) zur Überführung der seriellen TDMT-Bitstromzustände jedes Kanal-Auftrittsvorganges auf den ersten Übertragungsbus (10) und zur Übertragung von Bitzuständen der m parallelen Signalpfade des Modul-Übertragungsbus (T-Bus;540) auf den seriellen TDMR-Bitstrom während des Auftretens entsprechender Kanäle oder Kanal-Auftrittsvorgänge,
Zeitschaltereinrichtungen (710,701), die zwischen dem ersten Übertragungsbus und dem Modul-Übertragungsbus (T-Bus; 770) angeschaltet sind, um Bitzustände von dem ersten Übertragungsbus (10) zu speichern, wobei die Bitzustände diejenigen sind, die während Zeitschlitzintervallen auftreten, die von dem Rufsteuergerät (8) festgelegt sind, und um die gespeicherten Bitzustände auf den Modul-Übertragungsbus (770) in Abhängigkeit von den definierten Kanal-Auftrittsvorgängen von den Zeitsteuereinrichtungen zu übertragen.

2. Digitales Tastentelefonsystem zur durch ein Rufsteuergerät (8) gelenkten Schaffung von Nachrichtenübertragungspfaden zwischen digitalen Signalübertragungsendgeräten (DSC) (13,14,15,17) über Leitungsnachbildungen, die durch entsprechende digitale Signalports (19) gebildet sind, wobei das digitale Tastentelefonsystem folgende Teile umfaßt:
einen ersten Übertragungsbus (10), der mehr als m parallele Leiter einschließt,
einen TDM-Übertragungspfad mit zumindestens einem Sende-(TDMT-) und einem Empfangs- (TDMR-) Kanal in fester Zuordnung zu jedem der digitalen Signalports (19), wobei jeder der Kanäle eine Vielzahl von Bitzuständen übertragen kann, deren Anzahl der Anzahl der parallelen Leiter entspricht,
ein Durchschaltemodul (100), das zwischen dem ersten Übertragungsbus (10) und dem seriellen TDM-Übertragungspfad (11) angeschaltet ist und folgende Teile umfaßt:
Zeitsteuereinrichtungen (11-113) zur Festlegung von TDM-Rahmenintervallen und seriellen Kanaladressen und zur Festlegung paralleler Zeitschlitzadressen, die ein ganzzahliges Vielfaches des Auftretens der seriellen Kanaladressen während jedes TDM-Rahmenintervalls sind,
einen Modul-Übertragungsbus (T-Bus;540;570), der aus m parallelen Leitern besteht,
Konvertereinrichtungen (501-506,511,521,531-533,535) zur Überführung serieller Bitzustände von jedem TDMT-Kanal auf die parallelen Leiter des ersten Übertragungsbus (10) während vorgegebener Zeitschlitze, und zur Überführung von Bitzuständen von den m parallelen Leitern des Modul-Übertragungsbus (T-Bus) auf jedes Auftreten eines TDMR-Kanals,
Zeitlageneinrichtungen (710,701), die auf die Zeitsteuereinrichtungen ansprechen, um Bitzustände von dem ersten Übertragungsbus (10) zu übertragen, die in Zeitschlitzen auftreten, die durch das Rufsteuergerät (8) festgelegt sind, und die in Speicherplätzen (701) gespeichert werden, die durch das Rufsteuergerät festgelegt sind, und um Bitzustände auf den Modul-Übertragungsbus (T-Bus;770) von denjenigen Speicherplätzen zu übertragen, auf die in Abhängigkeit von den seriellen Kanaladressen zugegriffen wird.

3. Digitales Tastentelefonsysytem nach Anspruch 2, bei dem die Konverterschaltung folgende Teile umfaßt:
erste, zweite und dritte orthogonale Speicheranordnungen (501,502,503),
wobei die erste Anordnung (501) zum seriellen Empfang von Bitzuständen von jedem der TDMT-Kanäle und zur Überführung, auf einer Kanal-für-Kanal-Basis, der m-Bitzustände auf die zweite Anordnung (502) sequentiell für eine parallele Zuführung auf die m Leiter des ersten Übertragungsbus (10) und zur Zuführung von zumindestens einem Bitzustand zusätzlich zu den m Bitzuständen auf einen entsprechenden Leiter des ersten Übertragungsbus dient,
wobei die zweite Anordnung (502) zur Zuführung von m Bitzuständen auf den ersten Übertragungsbus und dazu dient, daß wenn gerade die m Bitzustände auf den ersten Übertragungsbus übertragen wurden, m Bitzustände parallel von dem Modul-Übertragungsbus (T-Bus;540) an einem Ende (535) der zweiten Anordnung aufgenommen werden, um sequentiell diese Bitzustände einem entsprechenden TDMR-Kanal zur Übertragung auf den entsprechenden digitalen Signalport zuzuführen, während in der Zwischenzeit am anderen Ende der zweiten Anordnung sequentiell die m Bits des entsprechenden TDMT-Kanals für die erste Anordnung (501) empfangen werden,
wobei die dritte Anordnung (503) zur Aufnahme eines Bitzustandes dient, der von dem Rufsteuergerät (8) ausgegangen ist und für den entsprechenden TDMR-Kanal bestimmt ist, und zum Zuführen dieses Bitzustandes zu einem vorgegebenen Zeitpunkt auf das TDMR-Kanalintervall dient.

4. Digitales Tastentelefonsystem nach anspruch 2, bei dem das Durchschaltemodul (100) eine Verbindung für zwei TDM-Pfade bildet und die Konverterschaltung so ausgebildet ist, daß sie die TDMT- und TDMR-seriell-/parallel-Wandlung auf einer verschachtelten Kanal-für Kanal-Basis durchführt.

5. Digitales Tastentelefonsystem nach Anspruch 2, das weiterhin eine Vielzahl der Durchschaltemoduln (100) umfaßt, wobei jedes Modul mit einem festverdrahteten eindeutigen Identifikationscode (ID0-ID3) verbunden ist, wobei die Zeitsteuereinrichtungen in jedem der Durchschaltemoduln auf den eindeutigen Identifikationscode ansprechen, so daß die zugehörigen TDM-Rahmenintervalle gleichphasig verteilt sind, und wobei die ganze Zahl, die das ganzzahlige Vielfache bildet, der Zahl 1 plus einer maximalen Anzahl von Durchschaltemodulen entspricht, die mit dem ersten Übertragungsbus verbindbar sind.

6. Verfahren zum Betrieb eines digitalen Tastentelefonsystems mit den folgenden Schritten:
a) Festlegung aufeinanderfolgender Rahmenintervalle und x aufeinanderfolgender Kanalintervalle in jedem der Rahmenintervalle, und, während jedes Kanalintervalls, Empfangen von m Informationsbits und zumindestens einem weiteren Bit und Aussenden von m Informationsbits und zumindestens einem weiteren Bit zwischen x/2 jeweiligen festen mit zwei Kanälen verbundenen digitalen Signalport-Positionen (19) und einer festen mit x Kanälen verbundenen Durchschalteposition (100),
b) Durchführen des Schrittes a) bei bis zu y Durchschaltepositionen und zugehörigen digitalen Signalport-Positionen,
c) an jeder Durchschalteposition, Zuführen von Bitzuständen, die in jedem Kanalintervall übertragen werden, parallel auf entsprechende parallele Leitungen eines ersten Übertragungsbus (10) bei Auftreten eines festen ausschließlich entsprechenden Zeitschlitzes in xy Zeitschlitzauftrittsvorgängen pro Rahmenintervall,
d) an einem Rufsteuergerät, Lesen der Zustände der anderen Bits von dem ersten Übertragungsbus (8) für auf den Sendekanal bezogene sequentiell codierte Informationen, die sich auf den Telefonrufvorgang beziehen, und gleichzeitiges Zuführen entsprechender anderer Bitzustände für den abschließenden Empfang an der digitalen Signalport-Position (19),
e) an jeder Durchschalteposition, Auffangen von m Bitzuständen von dem ersten Übertragungsbus während Zeitschlitz-Auftrittsvorgängen, die durch das Rufsteuergerät (8) festgelegt sind, und Speichern jedes der aufgefangenen m Bitzustände an bis zu x von x kanalzugeordneten Speicherplätzen (701), wie sie durch das Rufsteuergerät festgelegt sind,
f) sequentielles Lesen von m Bitzuständen von jedem der x Speicherplätze synchron mit dem Auftreten der x sequentiellen Kanalintervalle, die im Schritt a) festgelegt wurden,
g) in einem ersten Fall des Lesens eines festgelegten Speicherplatzes (701), Aussenden der m Bitzustände in dem Kanalintervall zum Empfang an der zugehörigen digitalen Signalport-Position, in einem zweiten Fall des Lesens eines nicht festgelegten Speicherplatzes, Übertragen eines vorgegebenen m-Bitzustandes, der einen Leerlaufcode darstellt, in dem Kanalintervall zum Empfang an der zugehörigen digitalen Signalport-Position, und in jedem Fall, Übertragen des anderen Bitzustandes wie er zu dem Zeitpunkt im Schritt d) geliefert wird, zum Empfang an der zugehörigen digitalen Signalport-Position (19).

7. Verfahren zum Betrieb eines digitalen Tastentelefonsystems, das die folgenden Schritte umfaßt:
a) sequentielles Übertragen von Bitzuständen von einem mit seriellem Rahmen und einem Ursprungskanal organisierten ersten Übertragungsmedium (11,12) auf exclusiv zugeordnete Zeitschlitze in einem mit parallelen Rahmen organisierten Übertragungsmedium (10),
b) Festlegen von zumindestens einem der Zeitschlitze, von dem Bitzustände in einem ersten Speicher (701) zu speichern sind, der eine Vielzahl von Speicherplätzen aufweist, die jeweils möglichen Bestimmungskanälen eines mit seriellen Rahmen und Kanälen organisierten zweiten Übertragungsmediums (11,21) entsprechen, Festlegen eines der Speicherplätze in Zuordnung mit jedem der festgelegten Zeitschlitze, und bei jedem Auftreten eines festgelegten Zeitschlitzes, Speichern der Bitzustände in dem festgelegten Speicherplatz,
c) Lesen jedes der entsprechenden Speicherplätze synchron mit dem Auftreten der Kanäle des zweiten Übertragungsmediums,
d) Zuführen von Bitzuständen bei deren Lesen von jedem festgelegten Speicherplatz auf ein zweites parallel organisiertes Übertragungsmedium (T-Bus;770), und anderenfalls Zuführen vorgegebener Bitzustände auf das zweite Übertragungsmedium,
e) Auffangen der Bitzustände bei deren Auftreten in dem zweiten parallel organisierten Übertragungsmedium (770) und Zuführen der zuletzt aufgefangenen Bitzustände seriell während des entsprechenden momentanen Kanals des seriellen, auf der Grundlage von Rahmen und Kanälen organisierten zweiten Übertragungsmediums (770), wobei Information in das digitale Tastentelefonsystem in einen Ursprungskanal übertragen und aus dem digitalen Tastentelefonsystem in einen Bestimmungskanal ausgeleitet wird.

8. Verfahren zum Betrieb eines digitalen Signalübertragungspfades gemäß Anspruch 7, mit den folgenden weiteren Schritten:
f) Festlegen eines weiteren der Zeitschlitze, von dem Bitzustände in einem zweiten Speicher (901) zu speichern sind, der zumindestens einen Speicherplatz aufweist, und Speichern der Bitzustände in diesem,
g) Festlegen eines Kanals in dem mit seriellen Rahmen und Kanälen organisierten zweiten Übertragungsmedium (11,21),
h) Zuführen der in dem Speicherplatz des zweiten Speichers (901) gespeicherten Bitzustände auf ein drittes parallel organisiertes Medium (991) zu einer Zeit, die einem in dem Schritt g) festgelegten Auftreten eines Kanals entspricht,
i) Auswählen eines der zweiten und dritten parallel organisierten Medien (T-Bus,991) in Abhängigkeit davon, welcher der jeweiligen diesen zugeführten Bitzustände einen höheren Wert aufweist, und
im Schritt e) Auffangen der Bitzustände von dem ausgewählten Medium,
wobei die Information in einem der beiden Ursprungskanäle ausgewählt und aus dem digitalen Tastentelefonsystem auf den Bestimmungskanal herausgeleitet wird, um eine Sprachkonferenzfunktion an einem Telefonstationsgerät zu schaffen, das dem Bestimmungskanal entspricht.

9. Digitales Tastentelefonsystem zur durch ein Rufsteuergerät (8) gelenkten Schaffung von Übertragungspfaden zwischen Leitungsnachbildungen, wobei das System folgende Teile umfaßt:
einen ersten Übertragungsbus (10), der mehr als m parallele Leiter einschließt,
einen seriellen TDM-Übertragungspfad (11) mit zumindestens einem Sende-(T-) Kanal und einem Empfangs-(R-) Kanal in einer festen Zuordnung zu jeder einer Vielzahl von Leitungsnachbildungen, wobei jeder der Kanäle Bitzustände übertragen kann, deren Anzahl der Anzahl der parallen Leiter entspricht,
ein Durchschaltemodul (100), das zwischen dem ersten Übertragungsbus (10) und dem seriellen TDM-Übertragungspfad (11) eingeschaltet ist und folgende Teile umfaßt:
Zeitsteuereinrichtungen (111,112,113) zur Festlegung von TDM-Rahmenintervallen und seriellen Kanaladressen und zur Festlegung paralleler Zeitschlitzadressen, die ein ganzzahliges Vielfaches des Auftretens der seriellen Kanaladressen während jedes TDM-Rahmenintervalls sind,
erste und zweite Modul-Übertragungsbusse (770,991), die jeweils aus m parallelen Leitern bestehen,
Konvertereinrichtungen (501-506,511,521,531-533,535) zur Überführung serieller Bitzustände von jedem TDMT-Kanal auf die parallelen Leiter des ersten Bus während vorgegebener Zeitschlitze, und zur Überführung von Bitzuständen von den m parallelen Leitern an einem der Modul-Übertragungsbusse (770, 991) auf jedes Auftreten eines TDMR-Kanals,
erste Zeitlageneinrichtungen (710,701), die auf die Zeitsteuereinrichtungen ansprechen, um Bitzustände, die in durch das Rufsteuergerät (8) festgelegten Zeitschlitzen in dem ersten Übertragungsbus (10) auftreten, an Speicherplätzen zu speichern, die durch das Rufsteuergerät festgelegten TDMR-Kanälen entsprechen, und um Bitzustände von durch die seriellen Kanaladressen festgelegten Speicherplätzen auf den ersten Modul-Übertragungsbus (770) zu übertragen,
zweite Zeitlageneinrichtungen (910,901), die auf die Zeitsteuereinrichtungen ansprechen, um Bitzustände, die in durch das Rufsteuergerät (8) festgelegten Zeitschlitzen in dem ersten Übertragungsbus (10) auftreten, an einem durch das Rufsteuergerät festgelegten Speicherplatz zu speichern, und um Bitzustände auf den zweiten Modul-Übertragungsbus (991) von einem der Speicherplätze zu überführen, der durch das Rufsteuergerät als einer der seriellen Kanaladressen zugeordnet festgelegt ist,
Auswahleinrichtungen (992,993), die auf die Werte der gleichzeitig auftretenden Bitzustände an den ersten und zweiten Modul-Übertragungsbussen ansprechen, um die Konvertereinrichtungen anzuweisen, die Bitzustände ausschließlich von einem der ersten und zweiten Modul-Übertragungsbusse zu überführen, wodurch die Möglichkeit einer Konferenz-Nachrichtenübertragung zwischen irgendwelchen drei der Leitungsnachbildungen in dem Durchschaltemodul (100) geschaffen wird.

## Revendications

1. Système téléphonique numérique à touches destiné à former des trajets de communication, sous la commande d'un organe (8) de commande d'appel, entre des terminaux (13, 14, 15, 17) de communication de signaux numériques (DSC) par des simulations de lignes formées par des voies correspondantes (19) de signaux numériques, le système téléphonique numérique à touches comprenant :
un trajet (11) de transmission série multiplexé temporellement (TDM), connecté à un nombre prédéterminé de voies de signaux numériques et destiné à délimiter un nombre prédéterminé de canaux de tranmission (TDMT) et de réception (TDMR) multiplexés temporellement appariés de manière fixe à chacune des voies de signaux numériques, les canaux TDMT et TDMR résidant dans des courants respectifs de tranmission et de réception de bits séries, et ayant un intervalle de tranches temporelles fixe pour la transmission d'un nombre fixe d'apparitions de bits en plus d'un nombre prédéterminé de m bits d'information,
un premier bus (10) de transmission comprenant au moins m trajets parallèles de signaux,
un dispositif de minutage (111, 112, 113) destiné à déterminer des intervalles de séquences TDM prédéterminés et des apparitions de canaux, dans le trajet (11) de transmission série TDM, et à déterminer des apparitions de tranches temporelles qui sont un multiple entier des apparitions de canaux pendant l'un des intervalles de séquence, pour le premier bus parallèle de transmission (10), en fonction des signaux de minutage provenant de l'organe (8) de commande d'appel,
un module (100) de commutation de circuit connecté entre le trajet (11) de transmission série TDM et le premier bus (10) de transmission et comprenant :
un bus de transmission de module (T BUS ; 540, 770) comprenant m trajets parallèles de signaux,
un dispositif à circuit de conversion (501-506, 511, 521, 531-533, 535) destiné à transférer les états du courant de bits séries TDMT de chaque apparition de canal au premier bus de transmission (10) et à transférer les états des bits des m trajets parallèles de signaux au bus de transmission de module (T BUS ; 540) au courant de bits séries TDMR lors des apparitions des canaux correspondants, et
un dispositif (710, 701) de commutation temporelle, connecté entre le premier bus de transmission (10) et le bus (T BUS ; 770) de transmission de module afin qu'il conserve les états des bits provenant du premier bus de transmission (10), les états des bits étant ceux qui apparaissent dans les intervalles de tranches temporelles qui ont été définis par l'organe (8) de commande d'appel, et qu'il transfère les états des bits mémorisés au bus (770) de transmission de module en fonction des apparitions des canaux déterminées du dispositif de minutage.

2. Système téléphonique numérique à touches destiné à former des trajets de communication, sous la commande d'un organe (8) de commande d'appel, entre des terminaux (13, 14, 15, 17) de communication de signaux numériques (DSC) par l'intermédiaire de simulations de lignes formées par des voies correspondantes (19) de signaux numériques, le système téléphonique numérique à touches comprenant :
un premier bus de transmission (10) comprenant plus de m conducteurs parallèles,
un trajet (11) de transmission TDM ayant au moins un canal de tranmission (TDMT) et de réception (TDMR) associé de manière fixe à chacune des voies (19) de signaux numériques, chacun des canaux pouvant transmettre plusieurs états de bits dont le nombre correspond à celui des conducteurs parallèles,
un module (100) de commutation de circuit, connecté entre le premier bus de transmission (10) et le trajet de transmission série TDM (11) et comprenant :
un dispositif de minutage (111-113) destiné à déterminer des intervalles de séquence TDM et des adresses de canaux séries, et à déterminer des adresses de tranches temporelles parallèles qui sont un multiple entier des apparitions des adresses de canaux séries dans chaque intervalle de séquence TDM,
un bus (T BUS ; 540, 770) de transmission de module comprenant m conducteurs parallèles,
un dispositif de conversion (501-506, 511, 521, 531-533, 535) destiné à transférer des états de bits séries de chaque canal TDMT aux conducteurs parallèles du premier bus de transmission (10) pendant des tranches temporelles préférées, et à transférer les états de bits des m conducteurs parallèles du bus (T BUS) de transmission de module à chaque apparition de canal TDMR,
un dispositif (710, 701) de commutation temporelle commandé par le dispositif de minutage et destiné à mémoriser des états de bits du premier bus de transmission (10) apparaissant dans les tranches temporelles déterminées par l'organe (8) de commande d'appel et à des emplacements de mémoire (701) définis par l'organe de commande d'appel, et à transférer les états des bits au bus (T BUS ; 770) de transmission de module à partir des emplacements de mémoire qui ont été atteints en fonction des adresses des canaux séries.

3. Système téléphonique numérique à touches selon la revendication 2, dans lequel le circuit de conversion comprend :
une première, une seconde et une troisième matrice orthogonale de mémoire (501, 502, 503),
la première matrice (501) étant destinée à recevoir en série les états des bits de chacun des canaux TDMT et, canal par canal, à transférer m états de bits à la seconde matrice (502) successivement pour l'excitation parallèle des m conducteurs du premier bus de transmission (10) et pour l'excitation d'au moins un état de bit en plus des m états de bits d'un conducteur correspondant du premier bus de transmission,
la seconde matrice (502) étant destinée à exciter m états de bits du premier bus de transmission et ayant les m états de bits juste excités dans le premier bus de transmission, afin qu'elle accepte m états de bits en parallèle provenant du bus (T BUS ; 540) de transmission de module et, à une première extrémité (535) de la seconde matrice, et à exciter séquentiellement les états de bits d'un canal TDMR correspondant pour leur transmission à la voie correspondante de signaux numériques, alors que, à l'autre extrémité de la seconde matrice, elle reçoit successivement les m bits du canal TDMT correspondant pour la première matrice (501),
la troisième matrice (503) étant destinée à accepter un état de bit, créé par l'organe (8) de commande d'appel et destiné au canal TDMR correspondant, et à exciter l'état de bit à un moment prédéterminé dans l'intervalle des canaux TDMR.

4. Système téléphonique numériques à touches selon la revendication 2, dans lequel le module (100) de commutation de circuit assure la connexion de deux trajets TDM, et le circuit de conversion est destiné à exécuter la conversion série-parallèle TDMT et TDMR canal par canal de façon entrelacée.

5. Système téléphonique numérique à touches selon la revendication 2, comprenant en outre plusieurs modules (100) de commutation de circuit, chaque module étant connecté avec un code câblé unique d'identification (ID0-ID3), et dans lequel le dispositif de minutage de chacun des modules de commutation de circuit est commandé par le code unique d'identification de manière que les intervalles associés de séquence TDM soient répartis en phase, et dans lequel le nombre entier qui constitue le multiple entier correspond à une unité de plus que le nombre maximal de modules de commutation de circuit qui peuvent être connectés au premier bus de transmission.

6. Procédé de commande d'un système téléphonique numérique à touches, comprenant les étapes suivantes :
a) la détermination d'intervalles successifs de séquence et de x intervalles successifs de canaux dans chacun des intervalles de séquence et, à chaque intervalle de canal, la réception de m bits d'information et d'au moins un autre bit et la transmission de m bits d'information et d'au moins un autre bit entre x/2 positions (19) de voies de signaux numériques connectées à deux canaux fixes respectifs et une position de commutateur de circuit (100) connectée à x canaux fixes,
b) l'exécution de l'étape a) jusqu'à y positions de commutateurs de circuit et à des positions associées de voies de canaux numériques,
c) à chaque position de commutateur de circuit, l'excitation des états des bits transmis dans chaque intervalle de canal en parallèle par des fils parallèles correspondants d'un premier bus de transmission (10) à des apparitions fixes de tranches temporelles correspondantes exclusives dans xy apparitions de tranches temporelles par intervalle de séquence,
d) dans un organe (8) de commande d'appel, la lecture des états des autres bits du premier bus de transmission (10) pour la transmission d'informations codées séquentiellement et liées aux canaux correspondant à la progression d'un appel téléphonique, et l'excitation de manière coïncidente d'autres états convenables de bits pour la réception finale à la position (19) de voies de signaux numériques,
e) à chaque position de commutateur de circuit, la saisie de m états de bits à partir du premier bus de transmission pendant les apparitions de tranches temporelles désignées par l'organe (8) de commande d'appel et la mémorisation de chacun des m états de bits saisis jusqu'à x emplacements parmi x emplacements (701) de mémoire associés aux canaux tels que désignés par l'organe de commande d'appel,
f) la lecture séquentielle de m états de bits dans chacun des x emplacements de mémoire en synchronisme avec les apparitions des x intervalles successifs de canaux définis dans l'étape a),
g) dans un premier cas de lecture d'un emplacement désigné (701), la transmission des m états de bits dans l'intervalle de canal pour la réception de l'emplacement associé (19) de voie de signaux numériques, dans un second cas de lecture d'un emplacement non désigné de mémoire, la transmission de m états prédéterminés de bits représentant un code de disponibilité, dans l'intervalle des canaux, pour la réception à l'emplacement associé (19) de voie de signaux numériques et, dans tous les cas, la transmission de l'autre état de bit transmis à l'instant dans l'étape d) pour la réception à l'emplacement associé (19) de voie de signaux numériques.

7. Procédé de commande d'un trajet de communication de signaux numériques dans un système téléphonique numérique à touches, comprenant les étapes suivantes :
a) le transfert successif d'états de bits d'une séquence série et d'un premier support (11, 12) de transmission organisé par canaux d'origine, à des tranches temporelles affectées exclusivement sur un support (10) de transmission à organisation à séquences parallèles,
b) la désignation de l'une au moins des tranches temporelles dont les états de bits doivent être conservés dans une première mémoire (701) ayant plusieurs emplacements de mémoire correspondant chacun à des canaux possibles de destination d'un second support (11, 21) de transmission organisé par canaux et séquences séries, la désignation de l'un des emplacements de mémoire en association avec chacune des tranches temporelles désignées et, à chaque apparition d'une tranche temporelle désignée, la mémorisation des états de bits à l'emplacement désigné de mémoire,
c) en synchronisme avec les apparitions de canaux du second support de transmission, la lecture de chacun des emplacements correspondants de mémoire,
d) l'excitation des états de bits, pendant la lecture à chaque emplacement désigné de mémoire, dans un second support (T BUS ; 770) de transmission à organisation parallèle et, autrement, l'excitation d'états prédéterminés de bits,
e) la saisie des états de bits lorsqu'ils apparaissent dans le second support (770) de transmission à organisation parallèle et l'excitation des derniers états de bits saisis en série pendant le canal instantané correspondant du second support (770) de transmission à organisation en canaux et séquences séries, de manière que l'information soit transmise dans le système téléphonique numérique à touches dans un canal d'origine et acheminée en dehors du système téléphonique numérique à touches dans un canal de destination.

8. Procédé de commande d'un trajet de communication de signaux numériques selon la revendication 7, comprenant les étapes supplémentaires suivantes :
f) la désignation d'une autre des tranches temporelles dont les états de bits doivent être conservés dans une seconde mémoire (901) ayant au moins un emplacement de mémoire, et la mémorisation des états de bits à cet emplacement,
la désignation d'un canal dans le second support (11, 21) de transmission à organisation à canaux et séquences séries,
h) l'excitation des états de bits conservés à l'emplacement de mémoire de la seconde mémoire (901) dans un troisième support (991) à organisation parallèle à un moment correspondant à l'apparition du canal désigné dans l'étape g),
i) la sélection de l'un des second et troisième supports (T BUS, 991) à organisation parallèle en fonction de celui des états respectifs de bits excités qui a une valeur élevée, et
dans l'étape e), la saisie des états de bits du support sélectionné,
si bien que l'information de l'un des deux canaux d'origine est sélectionnée et acheminée des systèmes téléphoniques numériques à touches au canal de destination pour l'obtention d'une fonction vocale de conférence à un poste de station téléphonique correspondant au canal de destination.

9. Système téléphonique numérique destiné à créer des trajets de communication, sous la direction d'un organe (8) de commande d'appel entre des simulations de lignes, le système comprenant :
un premier bus (10) de transmission ayant plus de m conducteurs parallèles,
un trajet (11) de transmission série TDM ayant au moins un canal de transmission (T) et un canal de réception (R) associés à demeure à chacune des simulations de ligne, chacun des canaux étant capable de transmettre des états de bits dont le nombre correspond à celui des conducteurs parallèles,
un module (100) de commutation de circuit connecté entre le premier bus (10) de transmission et le trajet (11) de transmission série TDM, comprenant :
un dispositif de minutage (111, 112, 113) destiné à déterminer des intervalles de séquence TDM et des adresses de canaux séries et à déterminer des adresses de tranches temporelles parallèles qui sont un multiple entier des apparitions des adresses des canaux séries à chaque intervalle de séquence TDM,
un premier et un second bus (770, 991) de transmission de module comprenant chacun m conducteurs parallèles,
un dispositif de conversion (501-506, 511, 521, 531-533, 535) destiné à transférer des états de bits séries de chaque canal TDMT aux conducteurs parallèles du premier bus pendant des tranches temporelles prédéterminées, et a transférer les états de bits des m conducteurs de l'un quelconque des bus (770, 991) de transmission de modules à chaque apparition de canal TDMR,
un premier dispositif (710, 701) de commutation temporelle commandé par le dispositif de minutage et destiné à mémoriser des états de bits, apparaissant dans des tranches temporelles du premier bus (10) de transmission déterminées par l'organe (8) de commande d'appel, à des emplacements de mémoire correspondant aux canaux TDMR déterminés par l'organe de commande d'appel, et destiné à transférer les bits d'états au premier bus (770) de transmission de modules à partir des emplacements de mémoire déterminés par les adresses de canaux séries,
un second dispositif (910, 901) de commutation temporelle commandé par le dispositif de minutage et destiné à conserver des états de bits apparaissant dans des tranches temporelles du premier bus (10) de transmission, de la manière définie par l'organe (8) de commande d'appel, à un emplacement de mémoire défini par l'organe de commande d'appel, et à transférer des états de bits au second bus (991) de transmission de module de l'un des emplacements d'adresse désigné par l'organe de commande d'appel associé à certaines des adresses de canaux séries, et
un dispositif de sélection (992, 993) commandé par les valeurs des états de bits apparaissant en coïncidence dans le premier et le second bus de transmission de module afin que le dispositif de conversion soit dirigé pour le transfert des états de bits de l'un des premier et second bus de transmission de module exclusivement, si bien que la possibilité de communication de conférence entre trois apparitions quelconques de lignes est donnée dans le module de commutation de circuit (100).
